# FASCICULE DE BREVET EUROPEEN

(11) **EP 0 681 358 B1**
(45) Date de publication et mention de la délivrance du brevet: **07.10.1998**
(21) Numéro de dépôt: 95401040.1
(22) Date de dépôt: 04.05.1995
(51) Int. Cl.: H02K 5/14, H02K 23/18

(54) **Dispositif porte-balai pour moteur électrique**
Bürstenhalteranordnung für einen elektrischen Motor
Brush-holder assembly for electric motor

(30) Priorité: 04.05.1994 FR 9405445
(43) Date de publication de la demande: 08.11.1995
(73) Titulaire: MOTEURS ALEXANDRE S.A., F-28190 Saint Georges sur Eure (FR)
(72) Inventeur: Le Tien, Phu, F-92330 Sceaux (FR)
(74) Mandataire: Debay, Yves

(56) Documents cités:
- EP-A- 0 261 542
- FR-A- 963 506
- US-A- 1 375 658
- US-A- 3 177 388

## Description

La présente invention concerne un dispositif porte-balai pour moteur électrique et en particulier pour tout type de moteur à commutation d'alimentation du rotor par collecteurs et balais.

Dans l'art antérieur, les principaux moteurs équipés de collecteurs et de balais sont les moteurs universels, les moteurs à aimant permanent et les moteurs pas-à-pas.

Dans ces moteurs, le rotor est bobiné avec des fils émaillés créant par un courant électrique un champ magnétique cylindrique de contre-réaction. Ce champ s'ajoute vectoriellement au champ magnétique du stator et le champ en résultant est donc dévié par rapport au champ du stator.

Pour qu'un moteur obtienne de meilleures performances et commutations il est nécessaire d'alimenter les fils du rotor avec un décalage et on appelle ce principe le calage.

Le comportement du moteur est d'autant meilleur que le calage est précis. Dans les techniques antérieures ce calage est lié à la machine de bobinage de rotor et se trouve ainsi limité à des angles assez grands de l'ordre de 15, 25, 30 ou 45 degrés, limitant ainsi les possibilités.

D'autre part, dans les moteurs existants l'un des facteurs d'isolation diélectrique est obtenu en laissant un espace entre le flasque et les lames du collecteur. Cette technique permet d'obtenir des tensions de tenue d'isolation de l'ordre de 1500 volts mais ne permet pas d'aller au-delà, sauf si l'on augmente l'espace de façon très importante, ce qui est incompatible avec la recherche de compacité des moteurs.

Le but de l'invention est de proposer un dispositif porte-balai qui permette, tout en bénéficiant d'une constitution et d'un montage simples et rapides du dispositif, d'améliorer la précision du calage de la machine et les qualités d'isolation diélectrique entre le flasque et le moteur.

Ce but est atteint par le fait que le dispositif porte-balai, pour tout type de moteur à commutation d'alimentation du rotor par un collecteur et balais, monté sur un flasque rendu solidaire de l'une des extrémités du stator par des moyens de fixation et comportant un élément porte-balai en matière isolante monté sur le dispositif porte-balai est caractérisé en ce que le flasque porte sur sa face intérieure tournée vers le stator au moins deux moyens de fixation parallèles à l'axe de rotation du rotor, l'élément porte-balai ayant une forme de couronne comportant deux logements porte-balai disposés de façon diamétralement opposée, la couronne est pourvue substantiellement sur la totalité de la périphérie restante et sur un diamètre correspondant à l'espacement des moyens de fixation du flasque, d'une pluralité de trous de positionnement de la couronne disposés selon un pas angulaire, la couronne se prolongeant vers le centre par une surface en forme de disque de diamètre intérieur supérieur au diamètre de l'extrémité de l'axe du rotor et inférieur au diamètre du collecteur.

Un autre but de l'invention est de diminuer les bruits de moteur et l'usure des balais.

Ce but est atteint par le fait que les balais sont montés par rapport à un plan perpendiculaire à l'axe de symétrie du moteur avec un angle d'inclinaison réglable pour diminuer le niveau sonore.

Selon une autre particularité, l'angle d'inclinaison est soit obtenu par une sur-épaisseur formée sur le dos de la couronne, soit réglable par rajout d'une pièce entre la couronne et le flasque.

Selon une autre particularité, une feuille en matière souple découpée est intercalée entre le flasque et la couronne pour contribuer à diminuer le niveau sonore.

Selon une autre particularité, les moyens de fixation sont soit deux tétons soit deux vis.

Selon une autre particularité, les éléments porte-balai de la couronne comportent dans le puits au moins deux surfaces formant un épaulement destiné à recevoir une gaine métallique de balais comportant au moins deux saillies destinées à venir appuyer sur les épaulements respectifs ce qui permet d'avoir une seule couronne et une seule gaine pour plusieurs types de collecteurs.

Selon une autre particularité, la couronne comporte, des éléments de clipsage permettant le support d'un ou plusieurs condensateurs et d'un ou plusieurs protecteurs thermiques.

Selon une autre particularité, les éléments porte-balai de la couronne comportent deux perçages latéraux de chaque côté du puits destiné à recevoir le balai et de direction parallèle à l'axe de rotation du rotor, l'un de ces perçages étant destiné à recevoir le câble de liaison électrique du bobinage, l'autre la cosse réalisant la liaison thermique entre le câble et une extrémité de l'élément clipsé.

Selon une autre particularité, le sommet des puits des éléments porte-balai est obturable à l'aide d'un élément couvercle se glissant dans des rainures prévues à cet effet.

Selon une autre particularité, la surface extérieure des éléments porte-balai comporte une gorge périphérique destinée à recevoir une bague de protection en forme de cylindre pourvu sur la paroi cylindrique de deux encoches opposées aux dimensions de la gorge de chaque élément porte-balai, la dite bague venant en appui sur un flasque de surface circulaire.

Selon une autre particularité, la couronne porte-balai est fixée avec des vis montées dans des trous taraudés du flasque.

Selon une autre particularité, la couronne porte-balai est sertie sur le flasque à l'aide des tétons.

D'autres particularités et avantages de la présente invention apparaîtront plus clairement à la lecture de la description ci-après faite en référence aux dessins annexés dans lesquels :
- la figure 1 représente une vue de face de l'extrémité d'un moteur constitué d'un flasque, d'un dispositif porte-balai et d'une section du collecteur ;
- la figure 2 représente une vue latérale du flasque ;
- la figure 3 représente une vue de face du dispositif porte-balai ;
- la figure 4 représente une vue de dessus du dispositif porte-balai ;
- la figure 5 représente une vue de côté du dispositif porte-balai ;
- la figure 6 représente une vue de face du flasque.

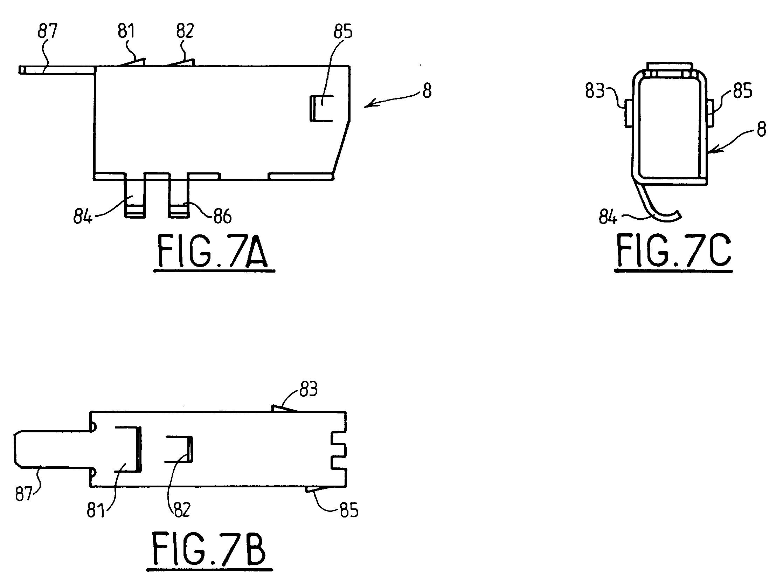

- la figure 7A représente une vue de face d'une gaine de balais ;
- la figure 7B représente une vue de dessus d'une gaine de balais ;
- la figure 7C représente une vue de côté de la gaine de balais.

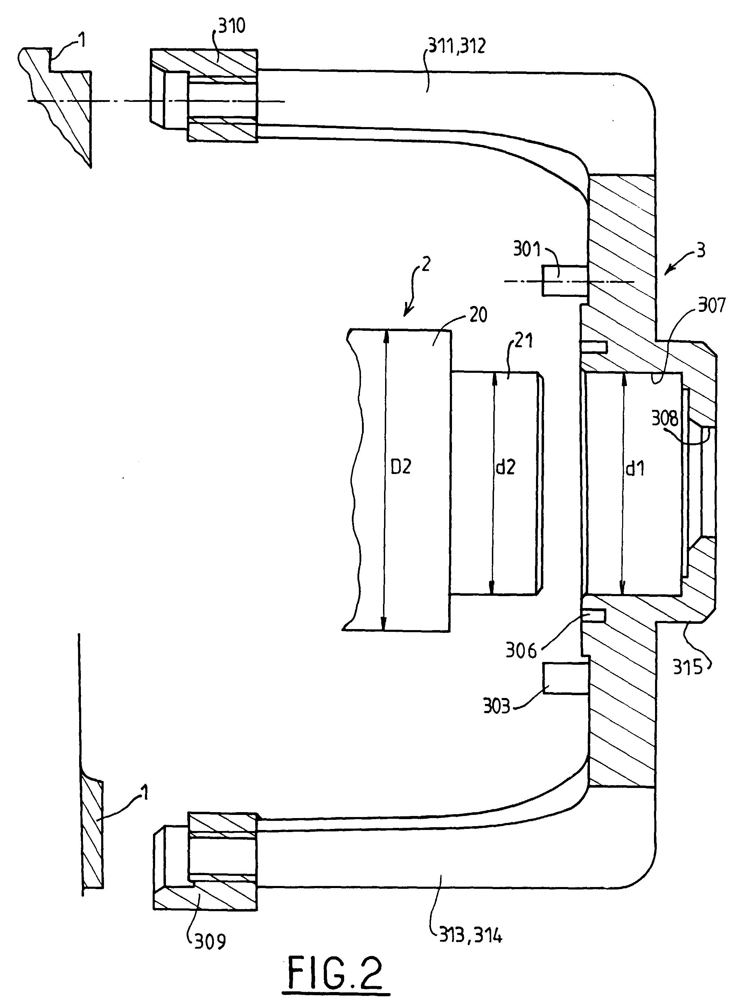

La figure 2 représente les composants principaux d'un moteur qui est constitué d'un rotor bobiné (2) dont seule l'extrémité comportant le collecteur (20) a été représentée. Cette extrémité du collecteur (20) se prolonge par un axe (21) pourvu d'un coussinet ou roulement pour à assurer la rotation du rotor et monté dans le logement cylindrique (307) d'un flasque (3). Ce flasque (3) est rendu solidaire par des moyens de fixation d'un stator dont l'extrémité (1) a été représentée.

Le stator (1) est formé, dans le cas d'un moteur à aimant permanent, d'un aimant et d'une carcasse et, dans le cas d'un moteur universel, d'un paquet de tôles sur lequel sont bobinés les inducteurs.

Le flasque (3) comporte en général des moyens permettant de fixer des balais pour réaliser le contact avec le collecteur. A son autre extrémité, le moteur comporte un autre flasque dit "flasque ventilateur", lui-même équipé de coussinets ou roulements pour permettre la rotation du rotor.

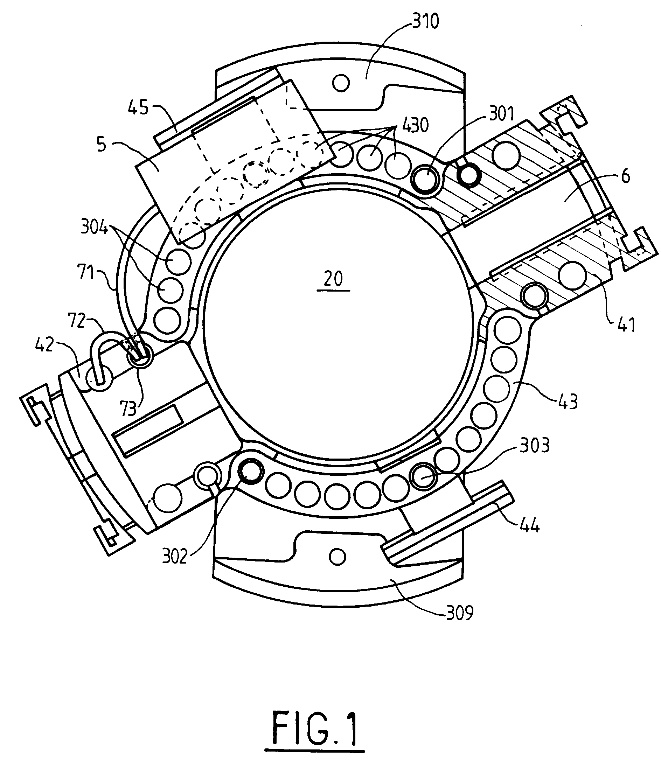

L'invention sera décrite plus particulièrement en liaison avec les figures 1 à 6.

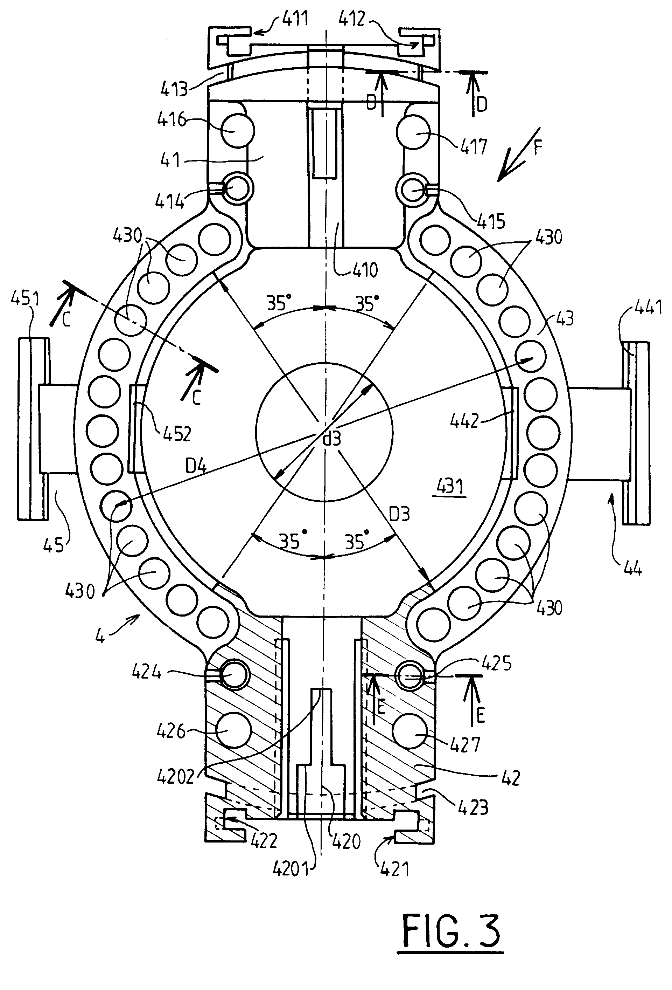

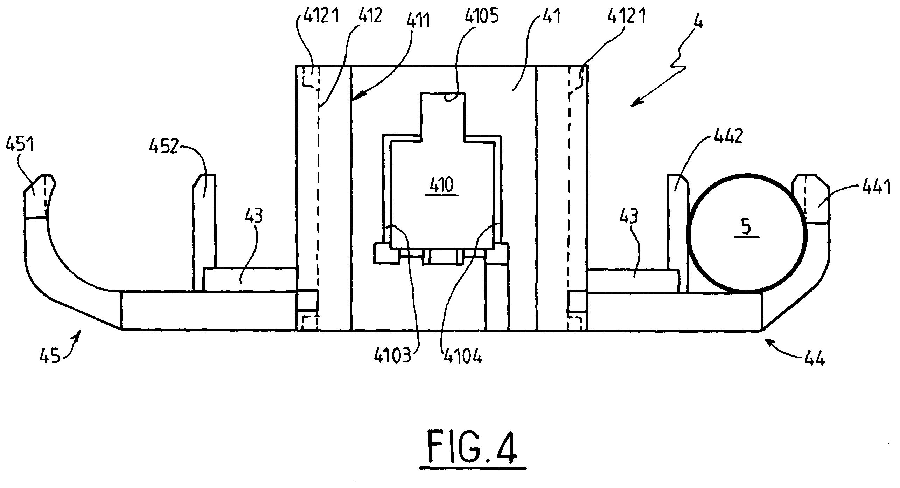

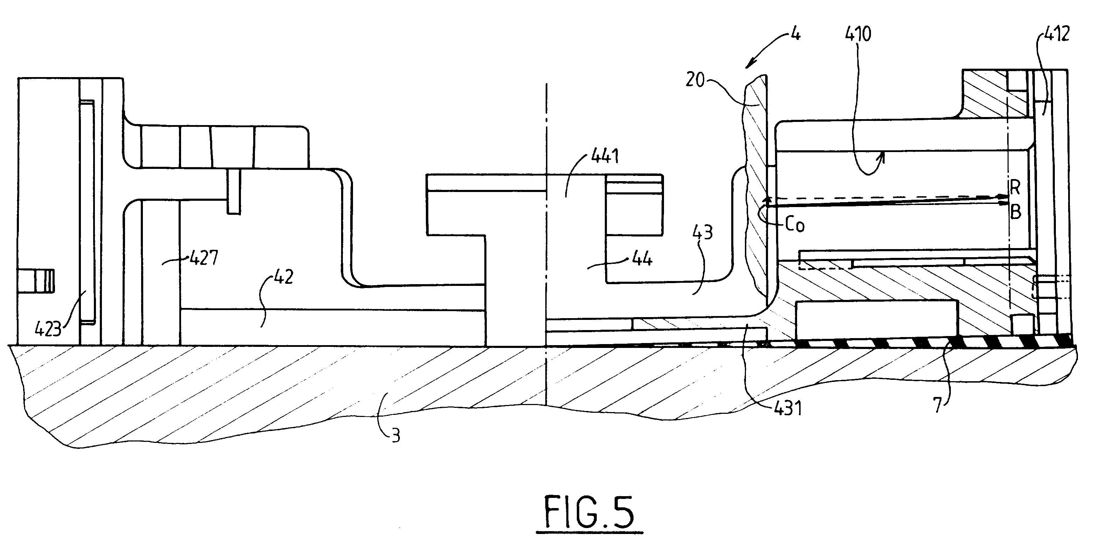

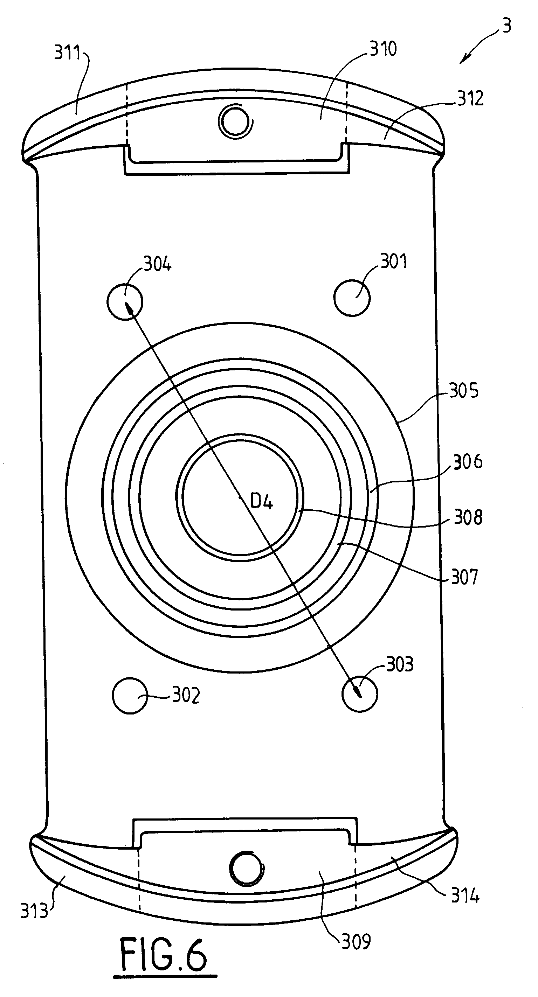

Sur la figure 6, on peut voir que le flasque selon l'invention comporte au moins deux tétons (301, 302) disposés de façon diamétralement opposée. Ces deux tétons pourront être également associés en général avec deux autres tétons opposés (304, 303) également disposés selon un autre diamètre de façon à concorder avec les trous de la couronne (43) et assurer une meilleure fixation et stabilité à une pièce porte-balai (4) représentée aux figures 3 à 5. Cette pièce porte-balai est fixée sur le flasque (3) par sertissage des tétons lorsque ceux-ci sont introduits dans des trous (430) pourvus sur une couronne (43) prévue à la périphérie de la pièce porte-balai (3). Les trous (430) sont formés à un pas régulier, par exemple compris entre 5 et 15 degrés, et sur l'exemple représenté à la figure 3, avec un pas de l'ordre de 10 degrés. Selon deux directions diamétralement opposées, la couronne (43) est interrompue sur un angle de l'ordre de 35 degrés de part et d'autre de l'axe de symétrie de façon à permettre le passage des balais (6, figure 6) montés dans des éléments porte-balai opposés (41, respectivement 42) formant une seule pièce avec la couronne (43). Ces éléments porte-balai (41, 42) sont constitués d'un bloc parallélépipédique pourvu d'un puits central (410, 420, figures 4 et 3). Dans la masse des éléments porte-balai (42, 43) entourant le puits (410, respectivement 420), des perçages (414, 415, 416, 417), respectivement (424 à 427). Les premiers (416, 417 et 426, 427) sont prévus selon des directions parallèles à l'axe de rotation du moteur pour permettre l'insertion de câbles (72) de liaison électrique avec les bobinages ou les autres éléments permettant la commutation et l'alimentation du collecteur. Les seconds (414, 415, 424, 425) sont destinés à recevoir des cosses de liaison (73) entre les câbles (72) et les câbles (71) de liaison soit avec un condensateur (5) soit avec un protecteur thermique. Les axes de symétrie des puits (410, 420) sont disposés dans un plan radial par rapport à l'axe de rotation du rotor et dans un plan radial perpendiculaire sont disposés les axes de symétrie de deux bras (44, 45) opposés qui s'étendent au-delà de la couronne. Ces deux bras (44, 45) se prolongent chacun dans une direction parallèle à l'axe de rotation du rotor par une griffe (441, respectivement 451) qui permet de coincer entre son évidement de forme circulaire et un doigt parallèle associé (452, respectivement 442) un élément (5) formant soit un condensateur, soit un protecteur thermique. La surface (43) en forme de couronne se prolonge vers le centre de la pièce porte-balai (4) par une surface (431) en forme de disque représentée en coupe à la figure 5, et de face sur la figure 3. Cette portion de disque (431) a un diamètre extérieur (D3) égal au diamètre de la couronne (43) et supérieur au diamètre (D2) du collecteur (20) du rotor du moteur et un diamètre (d3) permettant de recevoir l'axe (21) de pivotement du rotor. Les puits (410, 420) porte-balai se terminent vers leur extrémité supérieure par des gorges (412, 422) formées dans des rebords (411, 421) qui permettent de recevoir un couvercle conformé de façon à venir se glisser entre les deux guides (421, respectivement 411) et se clipser dans les logements (4221, 4121) prévus en extrémité des gorges (422, 412). La surface extérieure des puits (410, 420) porte-balai comporte à proximité de l'extrémité supérieure des gorges extérieures (423, 413) de forme circulaire pour recevoir les flancs cylindriques d'une bague d'étanchéité dont les bords des découpes pratiquées sur la partie cylindrique se glissent dans les gorges (413, 423) prévues à cet effet sur le porte-balai (4) pour former, dans les cas où cela est souhaitable, un moteur étanche. Le flasque (3) comporte des jambes (311, 312, 313, 314) à l'extrémité desquelles est formée une surface d'appui (309, 310), la surface d'appui (310) forme un pont entre les jambes adjacentes (311, 312) et la surface (309) d'appui forme un pont entre les jambes adjacentes (313, 314). Ces surfaces d'appui (310, 309) reçoivent l'extrémité (1) du stator et sont pourvues de perçages pour permettre le passage d'un goujon permettant le serrage du flasque (3) sur le stator à l'aide d'un écrou qui vient se loger entre les jambes associées à la surface d'appui pour achever de constituer de façon simple la structure du moteur.

Chaque puits (410, 420) de la pièce porte-balai est destiné à recevoir un balai (6) monté dans une gaine de balais (8) de forme tubulaire à section carrée. Cette gaine (8) comporte deux languettes (81, respectivement 82) rabattables pour venir appuyer sur l'épaulement (4201, 4101), respectivement (4202, 4102) des puits (420, 410) pour permettre de positionner le balai en fonction de la taille du collecteur et des performances du moteur. Cette gaine ajoute donc à la flexibilité du dispositif en contribuant à limiter le nombre de pièces fabriquées pour une gamme étendue de moteurs. Des ergots (83, 85), disposés sur les faces adjacentes à la face comportant les languettes, contribuent au guidage et coulissement de la gaine dans les gorges latérales (4103, 4104), respectivement (4203, 4204) du puits (410), respectivement (420).

Des languettes (84, 86) rendues élastiques par leur forme et disposées sur la face opposée aux languettes (81, 82) rabattables permettent un coulissement et guidage dans la rainure (4105), respectivement (4205) prévue dans le puits (410), respectivement (420).

Ainsi, la pluralité de perçages (430) permet de modifier le calage des balais en fonction des caractéristiques des moteurs. Un seul dispositif porte-flasque et porte-balai, permet la fabrication de différents moteurs dont les caractéristiques de calage varient selon leurs caractéristiques électriques.

Enfin, le dispositif porte-balai présente l'avantage de permettre la fixation des éléments condensateur et de protection thermique de façon simple et efficace ainsi que la fixation des câbles de liaison entre les balais, les éléments condensateurs et protecteurs thermiques et les bobinages.

En outre, l'angle d'inclinaison des charbons (6) peut être modifié, de façon souhaitée, en plaçant une cale (7) entre le flasque (3) et la pièce porte-balai (4) comme représenté à la figure 5. Les charbons disposés dans le puits (410) viennent frotter sur la surface du collecteur (20) de façon à ce que la résultante R se décompose en une force tangentielle C et une force radiale B, la force tangentielle ayant pour résultat de diminuer le niveau sonore du moteur. La cale peut être intégrée au porte-balai (4).

On peut également intercaler entre la pièce porte-balai (4) et le flasque (3) une feuille découpée en matière souple ayant des propriétés d'absorption de bruit, de façon à contribuer également à la diminution du bruit.

Le montage de la pièce porte-balai (4) est simple car il suffit de positionner cette pièce sur les tétons et ensuite de sertir les tétons (301 à 304) du flasque (3) pour que les porte-balai (410, 420) soient positionnés avec précision par rapport au flasque pour un moteur donné. Les balais (6) sont ensuite introduits dans leur puits (410, 420). Le réglage de la position des balais par rapport au flasque selon l'invention permet de résoudre les problèmes évoqués ci-dessus.

L'invention procure un avantage de grande flexibilité en utilisant un nombre limité de couronne pour une pluralité de tailles moteur en un nombre supérieur aux couronne. Grâce aux tétons de centrage, chaque couronne peut être montée sur tous les moteurs.

## Revendications

1. Dispositif porte-balai pour tout type de moteur à commutation d'alimentation du rotor (2) par un collecteur et balais, monté sur un flasque (3) rendu solidaire de l'une des extrémités du stator par des moyens de fixation et comportant un élément porte-balai en matière isolante monté sur le dispositif porte-balai, caractérisé en ce que le flasque (3) comporte sur sa face intérieure tournée vers le stator au moins deux moyens de fixation (301, 302) parallèles à l'axe de rotation du rotor, l'élément porte-balai (4) ayant une forme de couronne (43) comportant deux logements porte-balai (41, 42) disposés de façon diamétralement opposée, la couronne (43) étant pourvue substantiellement sur la totalité de la périphérie restante et sur un diamètre correspondant à l'espacement des moyens de fixation du flasque, d'une pluralité de trous (430) de positionnement de la couronne (43) disposés selon un pas angulaire, la couronne (43) se prolongeant vers le centre par une surface (431) en forme de disque de diamètre intérieur (d3) supérieur au diamètre (d2) de l'extrémité de l'axe du rotor (2) et inférieur au diamètre (D2) du collecteur.

2. Dispositif porte-balai selon la revendication 1, caractérisé en ce que les balais (6) sont montés par rapport à un plan perpendiculaire à l'axe de symétrie du moteur avec un angle d'inclinaison réglable pour diminuer le niveau sonore.

3. Dispositif porte-balai selon la revendication 2, caractérisé en ce que l'angle d'inclinaison est soit obtenu par une sur-épaisseur formée sur le dos de la couronne (43), soit réglable par rajout d'une pièce entre la couronne (43) et le flasque (3).

4. Dispositif porte-balai selon une des revendications 1 à 3, caractérisé en ce qu'une feuille en matière souple découpée est intercalée entre le flasque (3)et la couronne (43) pour contribuer à diminuer le niveau sonore.

5. Dispositif porte-balai selon une des revendications précédentes, caractérisé en ce que les moyens de fixation sont soit deux tétons, soit deux vis.

6. Dispositif porte-balai selon une des revendications 1 à 3, caractérisé en ce que la couronne (43) comporte des éléments de clipsage (441, 451) permettant le support d'un ou plusieurs condensateurs (5) ou d'un ou plusieurs protecteurs thermiques.

7. Dispositif porte-balai selon une des revendications 1 à 6, caractérisé en ce que les éléments porte-balai (41, 42) de la couronne comportent dans le puits (410, 420) au moins deux surfaces formant deux épaulements (4101, 4102 ; 4201, 4202) destinés à recevoir une gaine métallique de balais comportant au moins deux saillies (81, 82) destinées à venir appuyer sur les épaulement respectifs

8. Dispositif porte-balai selon une des revendications 1 à 7, caractérisé en ce que les éléments porte-balai (41, 42) de la couronne comportent deux perçages (414 à 417 ; 424 à 427) latéraux de chaque côté du puits destinés à recevoir le balai (6) et de direction parallèle à l'axe de rotation du rotor (2), l'un de ces perçages étant destinés à recevoir le câble de liaison électrique du bobinage, l'autre la cosse réalisant la liaison électrique entre le câble et une extrémité d'élément clipsé.

9. Dispositif porte-balai selon la revendication 8, caractérisé en ce que le sommet des puits des éléments porte-balai (41, 42) est obturable par le sommet à l'aide d'un élément couvercle se glissant dans des rainures prévues à cet effet.

10. Dispositif porte-balai selon la revendication 8 ou 9, caractérisé en ce que la surface extérieure des éléments porte-balai comporte une gorge périphérique destinée à recevoir une bague de protection en forme de cylindre pourvu sur la paroi cylindrique de deux encoches opposées et aux dimensions de la gorge de chaque élément porte-balai, la dite bague venant en appui sur un flasque de surface circulaire.

11. Dispositif porte-balai selon une des revendications précédentes, caractérisé en ce que la couronne (43) porte-balai est fixée avec des vis montées dans des trous taraudés du flasque.

12. Dispositif porte-balai selon une des revendications précédentes, caractérisé en ce que la couronne (43) porte-balai est sertie sur le flasque (3) à l'aide des tétons (301 à 304).

## Patentansprüche

1. Bürstenhaltervorrichtung für alle Motortypen mit kommutierter Speisung des Ankers (2) über einen Kollektor und Bürsten, die auf einem Lagerschild (3) angebracht ist, der über Befestigungsmittel mit einem der Enden des Stators fest verbunden ist und ein Bürstenhalterelement aus isolierendem Material aufweist, das auf der Bürstenhaltervorrichtung montiert ist, dadurch gekennzeichnet, daß der Lagerschild (3) auf seiner dem Ständer zugewandten Innenseite wenigstens zwei zur Drehachse des Ankers parallele Befestigungsmittel (301, 302) aufweist, wobei das Bürstenhalterelement (4) die Form eines Kranzes (43) mit zwei Bürstenhalteraufnahmen (41, 42) hat, die diametral gegenüberliegend angeordnet sind, wobei der Kranz (43) im wesentlichen über den gesamten verbleibenden Umfang und auf einem Durchmesser, der dem Abstand der Befestigungsmittel des Lagerschildes entspricht, mehrere Löcher (430) zum Positionieren des Kranzes (43) aufweist, die gemäß einer Winkelteilung angeordnet sind, wobei der Kranz (43) zum Zentrum durch eine scheibenförmige Fläche (431) verlängert ist, deren innerer Durchmesser (d3) größer ist als der Durchmesser (d2) des Endes der Achse des Ankers (2) und der kleiner ist als der Durchmesser (D2) des Kollektors.

2. Bürstenhaltervorrichtungen nach Anspruch 1, dadurch gekennzeichnet, daß die Bürsten (6) zur Verringerung des Geräuschniveaus mit einem einstellbaren Neigungswinkel, bezogen auf eine zur Symmetrieachse des Motors senkrechte Ebene, angeordnet sind.

3. Bürstenhaltervorrichtung nach Anspruch 2, dadurch gekennzeichnet, daß der Neigungswinkel entweder durch eine auf dem Rücken des Kranzes (43) gebildete Überdicke erhalten wird oder durch Einfügen eines Teils zwischen dem Kranz (43) und dem Lagerschild (3) einstellbar ist.

4. Bürstenhaltervorrichtung nach einem der Ansprüche 1 bis 3, dadurch gekennzeichnet, daß als Beitrag zur Verringerung des Geräuschniveaus ein ausgeschnittenes Blatt aus weichem Material zwischen dem Lagerschild (3) und dem Kranz (43) eingefügt ist.

5. Bürstenhaltervorrichtung nach einem der vorstehenden Ansprüche, dadurch gekennzeichnet, daß die Befestigungsmittel entweder zwei Zapfen oder zwei Schrauben sind.

6. Bürstenhaltervorrichtung nach einem der Ansprüche 1 bis 3, dadurch gekennzeichnet, daß der Kranz (43) Klipselemente (441, 451) aufweist, durch die ein Kondensator oder mehrere Kondensatoren (5) oder eine thermische Schutzvorrichtung oder mehrere thermische Schutzvorrichtungen gehalten werden können.

7. Bürstenhaltervorrichtung nach einem der Ansprüche 1 bis 6, dadurch gekennzeichnet, daß die Bürstenhalterelemente (41, 42) des Kranzes in dem Schacht (410, 420) wenigstens zwei Flächen aufweisen, die zwei Absätze (4101, 4102; 4201, 4202) zum Aufnehmen einer metallischen Bürstenhülse bilden, die wenigstens zwei Vorsprünge (81, 82) zur Anlage an die jeweiligen Absätze aufweist.

8. Bürstenhaltervorrichtung nach einem der Ansprüche 1 bis 7, dadurch gekennzeichnet, daß die Bürstenhalterelemente (41, 42) des Kranzes zwei seitliche Bohrungen (414 bis 417; 424 bis 427) auf jeder Seite des Schachts zum Aufnehmen der Bürste (6) aufweisen, deren Richtung parallel zur Drehachse (2) des Ankers ist, wobei eine dieser Bohrungen das elektrische Verbindungskabel der Wicklung aufnehmen kann und das andere die Hülse aufnehmen kann, mit der die elektrische Verbindung zwischen dem Kabel und einem Ende des angeklipsten Elements hergestellt wird.

9. Bürstenhaltervorrichtung nach Anspruch 8, dadurch gekennzeichnet, daß das obere Ende der Schächte der Bürstenhalterelemente (41, 42) mit Hilfe eines Deckelelements verschließbar ist, das in hierzu vorgesehenen Rillen gleitet.

10. Bürstenhaltervorrichtung nach Anspruch 8 oder 9, dadurch gekennzeichnet, daß die äußere Oberfläche der Bürstenhalterelemente eine Umfangsrille aufweist, in der ein zylindrischer Schutzring aufgenommen werden kann, der auf der zylindrischen Wand mit zwei gegenüberliegenden Aussparungen versehen ist und dessen Abmessungen denen der Rille jedes Bürstenhalterelements entsprechen, wobei der Ring an einem Flansch mit kreisförmiger Oberfläche zur Anlage kommt.

11. Bürstenhaltervorrichtung nach einem der vorstehenden Ansprüche, dadurch gekennzeichnet, daß der Kranz (43) des Bürstenhalters mit Schrauben befestigt ist, die in Gewindebohrungen des Lagerschildes angeordnet sind.

12. Bürstenhaltervorrichtung nach einem der vorstehenden Ansprüche, dadurch gekennzeichnet, daß der Kranz (43) des Bürstenhalters auf dem Lagerschild (3) mit Hilfe von Zapfen (301 bis 304) verstemmt ist.

## Claims

1. Brush-holder device for any type of motor with commutation of supply for the rotor (2) by a collector and brushes, mounted on a flange (3) rigid with one of the ends of the stator by fixing means and comprising a brush-holder element made of insulating material mounted on the brush-holder device, characterised in that the flange (3) comprises on its inner face, facing the stator, at least two fixing means (301, 302) parallel to the axis of rotation of the rotor, the brush-holder element (4) having the shape of a crown (43) comprising two brush-holder compartments (41, 42) arranged so as to be diametrically opposite, the crown (43) being provided, over substantially the whole of the remaining periphery and over a diameter corresponding to the spacing of the means for fastening the flange, with a plurality of holes (430) for positioning the crown (43) arranged at an angular pitch, the crown (43) being extended towards the centre by a surface (431) in the form of a disk of an inside diameter (d3) greater than the diameter (d2) of the end of the shaft of the rotor (2) and less than the diameter (D2) of the collector.

2. Brush-holder device according to Claim 1, characterised in that the brushes (6) are mounted relative to a plane perpendicular to the axis of symmetry of the motor with an adjustable angle of inclination so as to reduce the sound level.

3. Brush-holder device according to Claim 2, characterised in that the angle of inclination is either obtained by an over-thickness formed on the back of the crown (43), or adjustable by adding a part between the crown (43) and the flange (3).

4. Brush-holder device according to one of Claims 1 to 3, characterised in that a sheet of cut-out flexible material is interposed between the flange (3) and the crown (43), to contribute towards reducing the sound level.

5. Brush-holder device according to one of the preceding claims, characterised in that the fixing means are either two pins or two screws.

6. Brush-holder device according to one of Claims 1 to 3, characterised in that the crown (43) comprises clip means (441, 451) making it possible to support one or more capacitors (5) and one or more thermal protectors.

7. Brush-holder device according to one of Claims 1 to 6, characterised in that the brush-holder elements (41, 42) of the crown comprise, in the well (410, 420), at least two surfaces forming two shoulders (4101, 4102; 4201, 4202) intended to receive a metal sheath of brushes comprising at least two projections (81, 82) intended to bear against the respective shoulders.

8. Brush-holder device according to one of Claims 1 to 7, characterised in that the brush-holder elements (41, 42) of the crown comprise two lateral holes (414 to 417; 424 to 427) on either side of the well, which are intended to receive the brush (6) and extend parallel to the axis of rotation of the rotor (2), one of these holes being intended to receive the electrical connection cable for the coil, the other being intended to receive the lug producing the electrical connection between the cable and one end of a clipped element.

9. Brush-holder device according to Claim 8, characterised in that the top of the wells of the brush-holder elements (41, 42) can be blocked off at the top by a cover element sliding inside grooves provided for the purpose.

10. Brush-holder device according to Claim 8 or 9, characterised in that the outer surface of the brush-holder elements comprises a peripheral channel intended to receive a protective ring of cylindrical shape provided on the cylindrical wall with two opposite notches and with the dimensions of the channel of each brush-holder element, said ring bearing against a flange with a circular surface.

11. Brush-holder device according to one of the preceding claims, characterised in that the brush-holder crown (43) is fixed with screws mounted in threaded holes in the flange.

12. Brush-holder device according to one of the preceding claims, characterised in that the brush-holder crown (43) is clamped onto the flange (3) with the aid of the pins (301 to 304).
